# EUROPEAN PATENT SPECIFICATION

(11) **EP 1 004 236 B1**
(45) Date of publication and mention of the grant of the patent: **28.08.2002**
(21) Application number: 99308509.1
(22) Date of filing: 27.10.1999
(51) Int. Cl.: A01K 5/00, A01K 5/02

(54) **Mixing device**
Mischer
Mélangeur

(30) Priority: 25.11.1998 GB 9825741; 24.06.1999 GB 9914677
(43) Date of publication of application: 31.05.2000
(73) Proprietor: G.E. Baker (U.K.) Limited, Bury St. Edmunds, Suffolk IP31 9RN (GB)
(72) Inventor: Harding, Mark Andrew, Rattlesden, Suffolk IP30 0RA (GB)
(74) Representative: Nash, Keith Wilfrid

(56) References cited:
- EP-A- 0 760 203
- US-A- 4 182 273
- US-A- 4 994 286

## Description

This invention relates to a mixing device and also to an animal feeding device incorporating the mixing device. The animal feeding device is especially suited to the feeding of young livestock and poultry, for example young pig immediately after weaning.

Known from EP-A-0 760 203 and US-a-4 994 286 are feeding devices delivering dry feed and liquid into an animal feeding trough. Liquid is delivered into the trough by means of a sprinkler or by a rotating liquid outlet, but this does not ensure that the animals always receive thoroughly and freshly mixed moist food.

According to the invention there is provided an animal feeding device comprising a hopper for dry animal feed material, an auger for drawing said material from the hopper in an at least partially downward direction within a supply tube having a bottom outlet, means for driving the auger, means for injecting liquid to be mixed with the dry feed material, at a point below the junction of the hopper and the supply tube, and a feeding trough into which animal feed material and liquid is directly delivered, characterised in that a mixing element, drivable by the auger, for mixing or completing mixing of the dry feed material, is located in a welled area of the feeding trough, from which moist food spills over into an animal feeding region of the trough.

Young pigs, immediately after weaning, find it difficult to accept dry food. Such young pigs find it easier to adapt from a sow's milk to a moist food, such as that provided by the animal feeding device of this invention. Tests have shown that, especially in the first week after weaning, use of the feeding device of the present invention enables weight gain of two to three times that achieved by normal dry food feeding methods and an accompanying separate liquid supply.

The invention is further described with reference to the accompanying drawings, in which:-
Figure 1 shows one embodiment of animal feeding device in accordance with the invention;
Figure 2 shows a modified embodiment; and
Figure 3 shows in more detail a preferred arrangement of the mixing well and parts adjacent thereto.

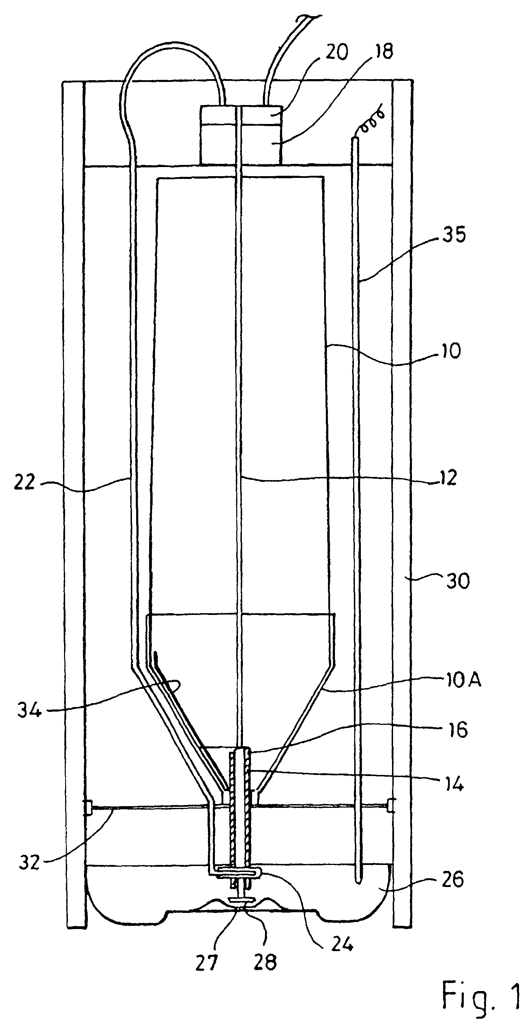

Referring to Figure 1, a circular hopper (10) with a vertical axis and a bottom end funnel (10A) has extending downwardly through it an on-axis auger shaft (12) leading to an auger (14) housed within a supply tube (16) extending through the opening of the funnel.

The auger (14) is drivable by an electric motor (18) which is mechanically linked to a peristaltic pump (20) also to be driven by the motor. From the pump (20), a feed pipe (22) extends down to a point of the supply tube (16) just above an outlet at its bottom funnel end, to deliver a liquid such as water to the interior of the supply tube through one or more openings in the wall thereof. The connection between the feed pipe (2) and the supply tube is enabled by a clamping ring (24).

In use, the auger draws down dry particulate animal food, more especially pig food, from the hopper. At the liquid injection point, liquid for moistening the feed is fed in as the auger continues to draw down the food to the outlet at the bottom of the supply tube. The amount of liquid fed in may be metered by a solenoid valve.

The animal food, together with the liquid, is delivered into a circular feeding trough (26) which, immediately below the bottom outlet of the supply tube (16), is formed with a well (27) within which rotates a paddle or analogous mixing element (28) driven from the bottom end of the auger. The paddle (28) in use ensures complete mixing of the dry food and liquid, before the now moist food spills out of the well (27) into the main part of the feeding trough (26).

Suspended from a hopper supporting frame (30) is a circular hoop (32), lying in a horizontal plane at an appropriate level above the rim of the feeding trough (26), such that in order to gain access to the feeding trough, an animal such as a young pig has to nudge the hoop upwardly, thereby to activate a switching means (not shown) which starts the auger driving motor (18) into operation. The circular hoop may be replaced by any other convenient form of animal operable nudge bar or the like

Also shown in Figure 1 is a stirrer blade (34), in use driven in rotation by the auger (14), and serving to prevent bridging and coagulation of the dry food within the funnel at the bottom of the hopper.

A level sensing probe (35) acts to prevent the moist food rising above a predetermined level in the trough (26). Moreover, a timer (not shown) may be incorporated which periodically signals the pigs to feed.

The timer may be used in combination with the animal operable switching means or, in some circumstances, may be used in place thereof, the noise of the motor and auger starting up providing an audible signal to the pigs.

Partial or total control by a timer can also enable the feeder to dose food according to a feed plan specifically suited to the age, development state and number of pigs to be fed. For example, the timer may switch on the feeder and signal the pigs for feeding at hourly intervals, the feeder remaining operative for a period appropriate for mixing the correct dosage of food for the number of pigs to be fed, dependent on their age and development state. At or after the end of this period, when the feeder is switched off, the pigs will have eaten all the food in the trough, so that the trough is left empty ready to receive the next hourly dosage and stale food is not allowed to ferment or become rancid, as the pigs will not eat stale food.

In this connection, it is important in the case of some foods and liquids that liquid enters the supply tube close to its bottom outlet, because the pigs demand freshly mixed food and, for example, may be liable to reject food which has been prior mixed during transport through the supply tube by the auger. However, injection of the liquid into the supply tube at any point in advance of the bottom outlet is not excluded, as in some cases this may be perfectly acceptable, and enable a degree of mixing to take place during transport through the supply tube.

It can also be arranged that, if all the pigs leave the feeding trough, releasing the animal operable switching means, the motor drive to the auger is immediately switched off. Further, it can be arranged by use of animal operable switching means that, within a predetermined time limit, the timer is temporarily over-ridden to cause a small amount of food to be mixed and delivered if an animal calls for more food between the set intervals.

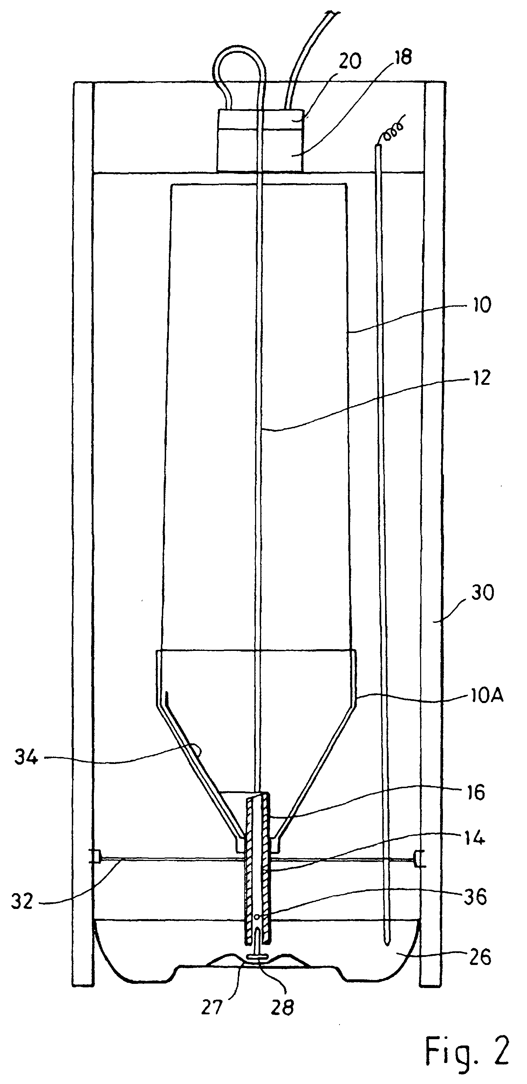

Figure 2, employing the same reference numerals as Figure 1 for similar parts, shows a modified embodiment in which the liquid is delivered to the injection point through the interior of the auger shaft (12) and auger (14), the wall of the auger being apertured, as indicated at 36, to deliver the liquid to the inside of the supply tube (16) close to the bottom end thereof.

In other respects, the embodiment of Figure 2 is similar to that of Figure 1.

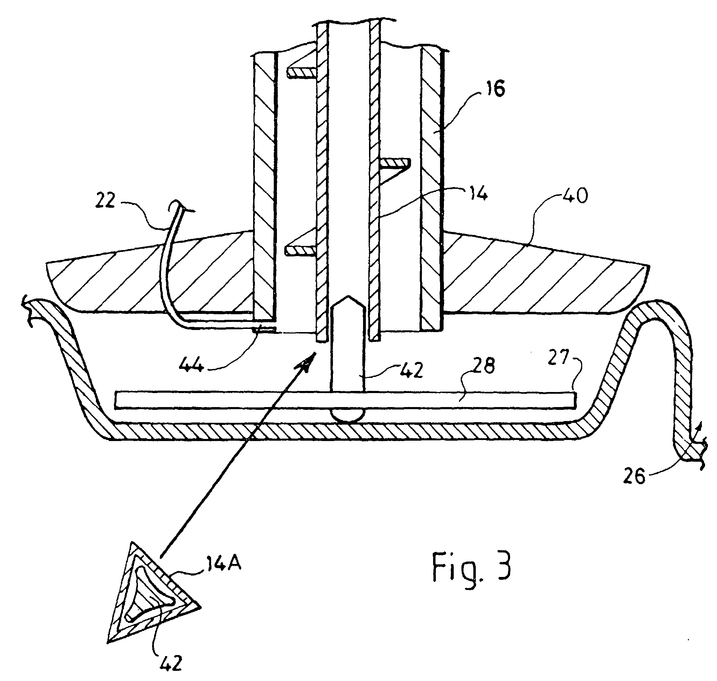

Figure 3 shows in more detail the preferred arrangement of the mixing well (27) and parts adjacent thereto. Especially to be noted is a cover (40) for the mixing well (27), carried by the bottom end of the supply tube (16). The cover constitutes a shield preventing animal access to the mixing well (27).

The transmission from the auger (14) to the mixing element (28) comprises a triangularly shaped bottom end (14A) to the auger, into which engages a triangularly shaped stub shaft (42) upstanding from the mixing element.

The top of the peripheral wall of the mixing well (27), over which moist food spills into the feeding trough (26), is smoothly curved over, down and outwards to form the base of the feeding trough.

It can also be more clearly seen that, in this preferred arrangement, the liquid injection point (44) is very close to the bottom end of the supply tube (16), so that the auger (14) plays substantially no part in the mixing of the dry animal feed and the liquid.

## Claims

1. An animal feeding device comprising a hopper for dry animal feed material, an auger for drawing said material from the hopper in an at least partially downward direction within a supply tube having a bottom outlet, means for driving the auger, means for injecting liquid to be mixed with the dry feed material, at a point below the junction of the hopper and the supply tube, and a feeding trough into which animal feed material and liquid is directly delivered, **characterised in that** a mixing element, drivable by the auger, for mixing or completing mixing of the dry feed material, is located in a welled area of the feeding trough, from which moist food spills over into an animal feeding region of the trough.

2. A device according to claiml, **characterised in that** the injection point is closely adjacent the bottom outlet of the supply tube.

3. A device according to claim 1 or claim 2 **characterised by** a liquid pump for pumping liquid to the injection point, the pump being driven by the auger or its driving means.

4. A device according to any of claims 1 to 3 **characterised in that** the liquid is fed down the inside of a auger drive shaft to the injection point, or the liquid is piped to the injection point and injected through the wall of the supply tube.

5. A device according to any of claims 1 to 4 **characterised by** a timer for at least in part controlling operation of the auger driving means.

6. A device according to any of claims 1 to 5 **characterised by** an animal operable switch means for at least in part controlling operation of the auger driving means, the switch means comprising a member positioned to be automatically operated by an animal seeking access to the feed trough.

7. A device according to any of claims 1 to 6 **characterised in that** the auger carries a stirrer which in use rotates within the hopper as the auger rotates.

8. A device according to any of claims 1 to 7 **characterised by** a level sensor for switching off the auger driving means when the moist food in the feeding trough reaches a predetermined level.

9. A device according to any of claims 1 to 8 **characterised by** a cover for the mixing well, the moist food overflowing from the welled area through a gap between the cover and the wall of the welled area.

10. A device according to claim 5 or any claim appendent thereto, **characterised in that** the timer is operable to dose the supply of moist food at set intervals in accordance with a feed plan.

11. A device according to claim 10 when appendent to claim 6 **characterised in that** operation of the animal operable switch between set intervals causes a fixed amount of moist food to be delivered into the feeding trough.

## Patentansprüche

1. Vorrichtung zum Füttern von Tieren, mit einem Bunker zur Aufnahme von trockenem Futtermaterial, einer Förderschnecke, die Material aus dem Bunker in einer mindestens teilweise nach abwärts gerichteten Bewegung innerhalb eines Zuführrohres mit einem Bodenauslass fördert, einer Vorrichtung zum Antreiben der Förderschnecke, einer Vorrichtung, die an einer Stelle unterhalb der Verbindungsstelle von Bunker und Zuführrohr Flüssigkeit einbringt, welche mit dem trockenem Futtermaterial gemischt werden soll, und einem Futtertrog, in den das Futtermaterial und Flüssigkeit direkt abgegeben werden, **dadurch gekennzeichnet, dass** ein von der Förderschnecke antreibbares Mischelement zum Mischen oder Fertigmischen des trockenen Futtermaterials in einem gewellten Bereich des Futtertroges angeordnet ist, von welchem befeuchtetes Futter in einem Tierfütterungsbereich des Troges gespült wird.

2. Vorrichtung nach Anspruch 1, **dadurch gekennzeichnet, dass** die Flüssigkeits-Einbringstelle in unmittelbarer Nähe des Bodenauslasses des Zuführrohres angeordnet ist.

3. Vorrichtung nach Anspruch 1 oder 2, **gekennzeichnet durch** eine Flüssigkeitspumpe zum Pumpen von Flüssigkeit an die Einbringstelle, wobei die Pumpe **durch** die Förderschnecke oder ihre Antriebsvorrichtung angetrieben ist.

4. Vorrichtung nach einem der Ansprüche 1 - 3, **dadurch gekennzeichnet, dass** die Flüssigkeit auf der Innenseite einer Förderschnecken-Antriebswelle an die Einbringstelle geführt wird oder die Flüssigkeit an die Einbringstelle geleitet und durch die Wand des Zuführrohres eingebracht wird.

5. Vorrichtung nach einem der Ansprüche 1 - 4, **gekennzeichnet durch** eine Zeitschaltvorrichtung, um zumindest teilweise den Betrieb der Förderschnecken-Antriebsvorrichtung zu steuern.

6. Vorrichtung nach einem der Ansprüche 1 - 5, **gekennzeichnet durch** eine von den Tieren betätigbare Schaltvorrichtung, um mindestens teilweise die Betätigung der Förderschnecken-Antriebsvorrichtung zu steuern, wobei die Schaltvorrichtung ein Bauteil aufweist, das so positioniert ist, dass es von einem Tier, das Zugang zu dem Futtertrog sucht, automatisch betätigt wird.

7. Vorrichtung nach einem der Ansprüche 1 - 6, **dadurch gekennzeichnet, dass** die Förderschnecke eine Rührvorrichtung aufweist, die im Betrieb innerhalb des Bunkers bei sich drehender Förderschnecke rotiert.

8. Vorrichtung nach einem der Ansprüche 1 - 7, **gekennzeichnet, durch** einen Pegelsensor zum Abschalten der Förderschnecken-Antriebsvorrichtung, wenn das nasse Futter im Futtertrog einen vorbestimmten Pegel erreicht.

9. Vorrichtung nach einem der Ansprüche 1 - 8, **gekennzeichnet durch** eine Abdeckung für die Mischquelle, wobei das Nassfutter, das von dem gewellten Bereich **durch** einen Spalt zwischen der Abdeckung und der Wand des gewellten Bereiches überströmt.

10. Vorrichtung nach Anspruch 5 oder einem von diesem abhängigen Anspruch, **dadurch gekennzeichnet, dass** die Zeitschaltvorrichtung so betätigbar ist, dass sie die Zufuhr von Nassfutter in einstellbaren Intervallen nach einem Fütterungsplan dosiert.

11. Vorrichtung nach Anspruch 10 in Verbindung mit Anspruch 6, **dadurch gekennzeichnet, dass** die Betätigung des von einem Tier betätigbaren Schalters zwischen einstellbaren Intervallen bewirkt, dass ein fester Anteil an Flüssigfutter in den Futtertrog abgegeben wird.

## Revendications

1. Dispositif pour l'alimentation d'animaux, comprenant une trémie pour une matière alimentaire sèche pour animaux, une tarière pour faire avancer ladite matière provenant de la trémie dans une direction au moins partiellement vers le bas dans un tube d'alimentation ayant une sortie inférieure, un moyen pour entraîner la tarière, un moyen pour injecter du liquide à mélanger avec la matière alimentaire sèche, en un point en dessous de la jonction de la trémie et du tube d'alimentation, et une auge d'alimentation dans laquelle la matière alimentaire pour animaux et le liquide sont délivrés directement, **caractérisé en ce qu'**un élément mélangeur, pouvant être entraîné par la tarière, pour mélanger ou achever le mélange de la matière alimentaire sèche, est situé dans une zone à puits de l'auge d'alimentation, depuis laquelle les aliments humides se déversent dans une région de l'auge pour l'alimentation des animaux.

2. Dispositif selon la revendication 1, **caractérisé en ce que** le point d'injection est très proche de la sortie inférieure du tube d'alimentation.

3. Dispositif selon la revendication 1 ou 2, **caractérisé par** une pompe à liquide pour pomper du liquide jusqu'au point d'injection, la pompe étant entraînée par la tarière ou son moyen d'entraînement.

4. Dispositif selon l'une quelconque des revendications 1 à 3, **caractérisé en ce que** le liquide est alimenté vers le bas à l'intérieur d'un arbre d'entraînement de la tarière jusqu'au point d'injection, ou le liquide est canalisé jusqu'au point d'injection et injecté à travers 1a paroi du tube d'alimentation.

5. Dispositif selon l'une quelconque des revendications 1 à 4, **caractérisé par** une minuterie pour contrôler au moins en partie le fonctionnement du moyen d'entraînement de la tarière.

6. Dispositif selon l'une quelconque des revendications 1 à 5, **caractérisé par** un moyen de commutation actionnable par un animal, pour contrôler au moins en partie le fonctionnement du moyen d'entraînement de la tarière, le moyen de commutation comprenant un organe positionné de façon à être actionné automatiquement par un animal cherchant à accéder à l'auge d'alimentation.

7. Dispositif selon l'une quelconque des revendications 1 à 6, **caractérisé en ce que** la tarière porte un agitateur qui, en fonctionnement, tourne dans la trémie à mesure que la tarière tourne.

8. Dispositif selon l'une quelconque des revendications 1 à 7, **caractérisé par** un détecteur de niveau pour arrêter le moyen d'entraînement de la tarière lorsque les aliments humides dans l'auge d'alimentation atteignent un niveau prédéterminé.

9. Dispositif selon l'une quelconque des revendications 1 à 8, **caractérisé par** un couvercle pour le puits de mélange, les aliments humides se déversant depuis la zone à puits à travers un espace entre le couvercle et la paroi de la zone à puits.

10. Dispositif selon la revendication 5, ou toute revendication en dépendant, **caractérisé en ce que** la minuterie peut être actionnée pour doser l'alimentation d'aliments humides à intervalles fixes correspondant à un plan d'alimentation.

11. Dispositif selon la revendication 10 lorsqu'elle dépend de la revendication 6, **caractérisé en ce que** l'actionnement du commutateur actionnable par un animal entre des intervalles fixes entraîne la fourniture d'une quantité fixe d'aliments humides dans l'auge d'alimentation.
